# EUROPÄISCHE PATENTSCHRIFT

(11) **EP 1 981 139 B1**
(45) Veröffentlichungstag und Bekanntmachung des Hinweises auf die Patenterteilung: **20.11.2013**
(21) Anmeldenummer: 08003321.0
(22) Anmeldetag: 23.02.2008
(51) Int. Cl.: H02G 3/08, H02G 3/18

(54) **Installationssystem**
Installation system
Système d'installation

(30) Priorität: 12.04.2007 DE 102007017201; 12.04.2007 DE 202007005286 U
(43) Veröffentlichungstag der Anmeldung: 15.10.2008
(73) Patentinhaber: Electraplan Solutions GmbH, 22869 Schenefeld (DE)
(72) Erfinder: Limbach, Frank, 53560 Vettelschoss (DE)
(74) Vertreter: Ziegler, Stefan Michael

(56) Entgegenhaltungen:
- EP-A1- 0 647 004
- EP-A1- 1 744 425
- EP-A2- 1 139 536
- DE-U- 6 906 706
- US-A1- 2009 168 306
- US-B1- 6 362 427

## Beschreibung

Die Erfindung betrifft ein Installationssystem, insbesondere für Unterfluranwendungen, zum Einführen eines oder mehrerer Leerrohre in einen Anschlussbereich, der nach außen durch mindestens eine Wand begrenzt wird, wobei durch Heraustrennen von einem oder mehreren Wandbereichen in dieser Wand Öffnungen für den Einlass der Rohrenden entstehen.

Bekannt sind eckige oder runde Bodendosen, an die runde Leerrohre bzw. im Querschnitt rechteckige Kanäle angeschlossen werden. Durch diese Rohre oder Kanäle lassen sich verschiedene Leitungen bis in den Aufnahmebereich der Bodendose verlegen und dort mit vorhandenen elektrischen Geräten, Schaltern oder anderen Anschlüssen verbinden. Da im Unterflurbereich nach dem Verlegen der Anschlusskanäle oder Anschlussrohre Estrich an die Bodendose angearbeitet wird, muss der Aufnahmebereich der Bodendose, in dem sich die elektrischen Geräte befinden, nach außen verschlossen sein, so dass kein Estrich in die Bodendose eindringen kann. Bekannte Bodendosen besitzen daher eine umlaufende geschlossene Wandung, wobei in den vorgesehenen Anschlussbereichen für die Leerrohre oder Kanäle heraustrennbare Wandbereiche vorgesehen werden, die im Bedarfsfall Öffnungen zum Anschluss der Kanäle oder zum Anschluss entsprechender Rohre freigeben.

Das europäische Patent EP 647 004 B1 zeigt ein wasserdichtes Gehäuse für elektrische Einrichtungen. Das Gehäuse besitzt Seitenwände mit kreisförmigen Ausschnitten, die als Durchführungen für Rohre dienen können, wenn der an diese Ausschnitte angeformte Elastomerfilm durchstoßen wird. Nachteilig bei dieser Ausführung ist, dass ausschließlich Rohre und insbesondere Rohre mit einem einheitlichen Durchmesser anschließbar sind.

Bei der Abzweigdose gemäß DE 37 90 482 T1 lassen sich Rohre zwei verschiedener Größen anschließen, obwohl die Seitenwand der Abzweigdose nur Öffnungen mit einem einheitlichen Durchmesser aufweist. Für den Anschluss wird ein Verbinder verwendet, der zum Eingriff in die Öffnungen der Seitenwand der Abzweigdose ausgebildet ist, wobei dieser Verbinder eine Aufnahme für ein Rohr eines bestimmten Durchmessers besitzt. Des Weiteren kann ein Verbinder verwendet werden, der in gleicher Weise in die Öffnung der Seitenwand der Abzweigdose einsetzbar ist und eine Aufnahme für ein Rohr mit einem kleineren oder größeren Durchmesser besitzt. Damit ist der Anschluss unterschiedlicher Rohre an die Abzweigdose mittels unterschiedlicher Verbinder möglich. Nachteilig ist, dass zum einen der Anschluss des Verbinders kompliziert gestaltet ist und zum anderen verschiedene Verbinder bevorratet werden müssen. Für die Verwendung einer solchen Abzweigdose im Unterflurbereich ist es nachteilig, dass die nicht verwendeten Öffnungen in der Abzweigdose mediendicht verschlossen werden müssen.

Aufgabe der vorliegenden Erfindung ist es, ein Installationssystem zur Verfügung zu stellen, das einfach aufgebaut ist und universell einsetzbar ist.

Diese Aufgabe wird mit einem Installationssystem mit den Merkmalen des Anspruchs 1 gelöst.

Die elektrischen oder sonstigen Geräte, Anschlüsse oder Schalter befinden sich in einem Anschlussbereich, der nach außen durch mindestens eine Wand begrenzt wird, nämlich bei einer runden Dose durch eine umlaufende Wandung oder bei einer eckigen Dose durch entsprechende Seitenwände. In der Wandung oder den Seitenwänden können durch Herauslösen von ein oder mehreren Wandbereichen Öffnungen gebildet werden, an die entsprechende Kanäle oder Leerrohre anschließbar sind. Das Heraustrennen der Wandbereiche kann durch entsprechende Wandschwächungen oder Perforationen in der Seitenwand erleichtert werden. Vorteilhaft ist es, wenn rechteckförmige Öffnungen entstehen. Die Wandschwächungen in der Seitenwand können einen wesentlichen Bereich der Seitenwand oder nur einen Teilbereich der Seitenwand freigeben, abhängig vom Querschnitt des Kanals oder der anzuschließenden Kanäle. Soll ein im Querschnitt rechteckigförmiger Kanal angeschlossen werden, dessen Querschnitte der größt möglichen Öffnung der Seitenwand entspricht, so werden alle möglichen Wandbereiche aus dieser Seitenwand herausgetrennt und der entsprechende Kanal mit der Bodendose verbunden. An die gleiche Öffnung lassen sich Rohre nicht ohne Weiteres anschließen. Hierzu wird ein Adapter verwendet. Ein solcher Adapter besitzt mindestens einen Rohreinsatz. Werden ausschließlich Rohre an einer Seitenwand der Bodendose angeschlossen, so kann der Adapter mehrere Rohreinlässe besitzen und wird vor der Öffnung der entsprechenden Seitenwand fixiert. Hierzu können entsprechende Befestigungselemente am Adapter vorgesehen werden.

Jeder Rohreinlass des Adapters ist wiederum durch eine Außenwand verschlossen, wobei diese Außenwand mehrere heraustrennbare Außenwandabschnitte besitzt. Das Herauslösen unterschiedlicher Außenwandabschnitte ermöglicht den Anschluss von Rohren unterschiedlichen Durchmessers. Dazu besitzt mindestens ein Außenwandabschnitt einen Rand mit einem kreisförmigen Verlauf. Wird dieser Außenwandabschnitt herausgetrennt, so entsteht eine Öffnung und damit ein kreisförmiger Zugang für ein rundes Rohr, wobei dieses Rohr den kleinstmöglichen Durchmesser der mittels dieses Adapters anschließbaren Rohre besitzt. Soll ein Zugang für ein Rohr mit einem größeren Durchmesser geschaffen werden, ist mindestens ein weiterer Außenwandabschnitt abzutrennen.

Bei einer bevorzugten Ausführungsform wird der Anschluss der Rohre an einer Bodendose gewährleistet. Bei Unterfluranwendung ist es besonders wichtig, dass die Anschlussrohre in einer Ebene verlegt werden, nämlich möglichst bodennah, da alle Rohre unterschiedlichen Durchmessers auf dem Boden aufliegen. Bei einer vom Boden abgehobenen Rohreinführung würden die Rohre und damit die in den Rohren verlaufenden Leitungen nur unnötig belastet werden. Um eine bodennahe Einführung der unterschiedlichen Rohre gewährleisten zu können, werden die heraustrennbaren Außenwandabschnitte für die Rohreinlässe des Adapters so gestaltet, dass sich nach dem Heraustrennen jeweils ein kreisförmiger Zugang ergibt, der mit seiner Unterseite den Boden der Bodendose berührt, d.h. alle kreisförmigen Zugänge eines Rohreinlasses sind exzentrisch zueinander angeordnet.

Wird ein Adapter mit mehreren Rohreinlässen verwendet, so ist es möglich, an eine Bodendose an unterschiedliche Rohreinlässe Rohre mit unterschiedlichen Durchmessern anzuschließen, indem die entsprechenden Zugänge mit den unterschiedlichen Durchmessern durch Heraustrennen entsprechender Außenwandabschnitte der jeweiligen Rohreinlässe gebildet werden. Da sämtliche Rohre bei einer exzentrischen Anordnung auf dem Boden aufliegen, werden diese beim Eingang in den Anschlussbereich der Bodendose nicht zusätzlich belastet.

Die Durchmesser der vorgesehenen möglichen Zugänge in den Rohreinlässen des Adapters entsprechen bei einer bevorzugten Ausführungsform standardisierten Außendurchmessern von einzusetzenden Rohren. Es werden die entsprechenden Standardmaße auf den herauszutrennenden Außenwandabschnitten durch eine entsprechende Beschriftung kenntlich gemacht. Dies erleichtert vor Ort, d.h. beim Verlegen der entsprechenden Rohre die Entscheidung, welcher Bereich der Außenwand des Rohreinlasses für den Anschluss eines bestimmten Rohres herausgetrennt werden muss.

Bei einer Ausführungsform werden in jedem Rohreinlass zusätzlich mehrere Rohrführungen für einzusetzende Rohre unterschiedlichen Durchmessers vorgesehen. Diese Rohreinführungen sind ineinander geschachtelt so angeordnet, dass zwischen zwei benachbarten Rohrführungen ein Hohlraum verbleibt. Dieser Hohlraum ist nach außen durch einen Außenwandabschnitt verschlossen. Soll nun ein Rohr mit kleinstmöglichen Durchmesser angeschlossen werden, wird der entsprechende Außenwandabschnitt herausgetrennt und das Rohr in den kreisförmigen Zugang eingeschoben, wobei innerhalb des Adapters das Rohr durch die vorhandene Rohrführung stützend geführt wird. Soll nun ein Rohr mit einem größeren Durchmesser angeschlossen werden, so sind weitere Außenwandabschnitte abzutrennen und mit diesen weiteren Außenwandabschnitten auch die Rohrführungen, die für Rohre mit kleinerem Durchmesser vorgesehen sind. Das Herausbrechen der Außenwandabschnitte wird durch Sollbruchstellen erleichtert. Diese können in Form von Perforationen und im Unterflurbereich insbesondere durch Wandschwächungen an den Rändern der Außenwandabschnitte realisiert werden.

Die vorgenannten Rohrführungen sind bei einer Ausführungsform so ausgestaltet sein, dass sie einzusetzende Rohrenden umfangsseitig aufnehmen, d.h. es werden bevorzugt zylindrische Rohrführungen vorgesehen. Es sind jedoch auch Rohrführungen möglich, die ein einzusetzendes Rohrende nur in Teilbereichen des Umfangs abstützen.

Bei einem Installationssystem für Unterfluranwendungen, beispielsweise bei einer Bodendose, werden die verschiedenen Rohrführungen für unterschiedliche Durchmesser exzentrisch im Rohreinlass angeordnet, so dass sämtliche Rohrführungen den Boden der Bodendose berühren und damit sämtliche an die Bodendose anzuschließenden Rohre nicht vom Boden weggebogen, angehoben oder in sonstiger Weise vom Boden abgehoben werden müssen, was zu unnötigen problematischen Belastungen der Rohre und in den Rohren enthaltenden Leitungen im Bereich des Eingangs in die Bodendose führen würde.

Der vorbeschriebene Adapter kann sowohl an eine eckige Bodendose als auch an eine runde Bodendose angeschlossen werden. Bei beiden Varianten der Bodendose sind heraustrennbare Wandbereiche vorzusehen und der Adapter besitzt entweder eine ebene Rückwand zum Anschluss an eine Seitenwand einer eckigen Bodendose oder eine gebogene Rückwand zum Anschluss an die Öffnung einer Wandung einer runden Bodendose. Für die Festlegung des Adapters können entsprechende Befestigungsmittel vorgesehen werden, die den Adapter an der Seitenwand und/ oder dem Boden und/ oder dem Rahmen der Bodendose festlegen. Zusätzlich kann der Adapter mit einem Auflageflansch ausgestattet sein, der auf dem Bodenrand der Bodendose oder auf der Rohdecke aufliegt.

Bei dem Adapter handelt es sich vorzugsweise um ein einstückig spritzgegossenes Kunststoffteil. Die Rohreinlässe, bedarfsweise mit Rohrführungen, werden so am Adapter angeordnet, dass sie sich nach Montage an der Bodendose außerhalb dieser Bodendose befinden. Somit wird der Aufnahmebereich der Bodendose, indem sich die Anschlüsse befinden, nicht reduziert.

Das vorbeschriebene Installationssystem ist universell einsetzbar. An ein und die gleiche Anschlussdose können, wie bekannt, im Querschnitt rechteckförmige Kanäle, aber auch Leerrohre unterschiedlichen Durchmessers angeschlossen werden.

Weitere Vorteile, Einzelheiten und erfindungswesentliche Merkmale ergeben sich aus der nachfolgenden Beschreibung eines Ausführungsbeispiels unter Bezugnahme auf die beigefügte Zeichnung. Dabei zeigen im Einzelnen:
- Fig. 1: eine perspektivische Ansicht einer Bodendose mit eingesetztem Adapter,
- Fig. 2: eine perspektivische Ansicht des Adapters,
- Fig. 3: eine Schnittdarstellung durch den Adapter gemäß Fig. 2.

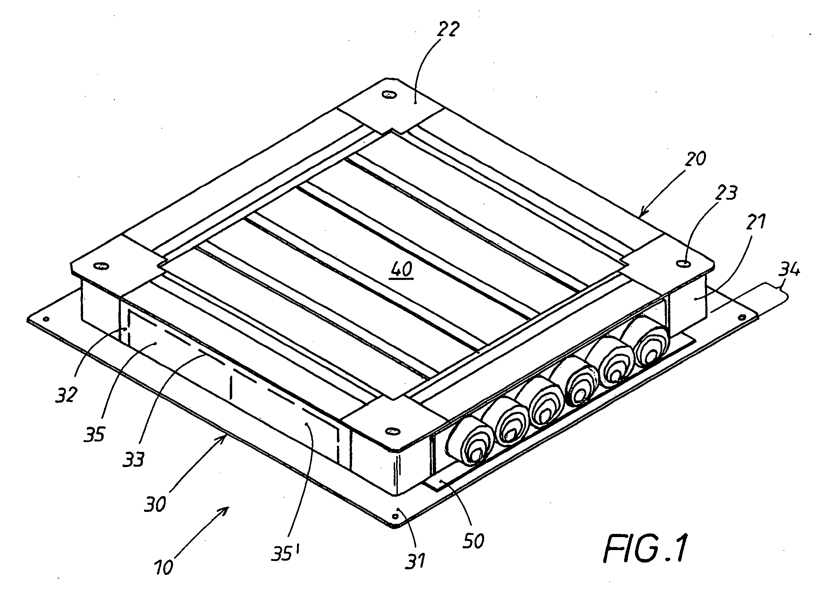

Von dem erfindungsgemäßen Installationssystem 10 sind in der Fig. 1 ausschließlich die Bodendose 30 und der Adapter 50 gezeigt. An diese Bodendose lassen sich sowohl runde Rohre als auch im Querschnitt rechteckförmige Kanäle anschließen.

Bei der Installation wird die Bodendose 30 mit ihrem Boden 31 auf die Rohdecke aufgesetzt. Im Boden 31 der Bodendose 30 sind dazu im Eckbereich Bohrungen vorhanden, damit die Füße, die den Rahmen 20 stützen, direkt auf der Rohdecke aufgesetzt werden können, was in Fig.1 nicht zu sehen ist. Diese Füße können in ihrer Höhe verändert werden und damit die Bodendose ausgerichtet werden. Dies ist auch noch nach der Installation möglich, in dem ein Werkzeug in entsprechende Bohrungen 23 des Rahmens 20 eingreifen kann. Der Rahmen 20 in Fig. 1 besteht aus einer quadratischen Einfassung 22, die jeweils an den Ecken von Winkelstücken 21 getragen wird. Der Rahmen 20 verdeckt damit nicht die Seitenwände 32 der Bodendose 30. Diese Seitenwände 32 sind zwischen den Winkelstücken 21 sichtbar. Die Seitenwände 32 besitzen heraustrennbare Wandbereiche 35, 35'. Durch Heraustrennen dieser Wandbereiche 35, 35' entstehen Öffnungen in der Seitenwand 32 der Bodendose 30 und damit ein Zugang für Leitungen in den Aufnahmebereich der Bodendose 30. Dieser Aufnahmebereich ist in Fig. 1 durch eine Abdeckung 40 verschlossen. In dem Aufnahmebereich können sich elektrische oder sonstige Geräte, Schalter oder Anschlüsse befinden, an die entsprechende Leitungen angeschlossen werden können.

Leitungen werden insbesondere im Unterflurbereich durch sie umgebende Kanäle oder Rohre geschützt. An diese Bodendose 30 gemäß Fig. 1 können Kanäle angeschlossen werden, die einen rechteckigen Querschnitt besitzen, wobei die Breite dieser Kanäle entweder der Breite des Wandbereichs 35 oder 35' entspricht oder aber der Gesamtbreite einer Öffnung nach Heraustrennen beider Wandbereiche 35, 35'. Es ist des Weiteren möglich, sowohl einen rechteckförmigen Kanal der Breite des Wandbereichs 35 anzuschließen und daneben mit Hilfe eines Adapters 50 ein oder mehrere Rohre, in diesem Fall ein bis drei Rohre unterschiedlichen Durchmessers. Der Adapter kann dann nur die halbe Breite des links in der Zeichnung von Fig.1 gezeigten Adapters 50 besitzen und dieser deckt die Öffnung ab, die durch Herauslösen des Wandbereichs 35' entsteht. Ein solcher Adapter lässt sich einfach durch einen Trennschnitt aus dem Adapter 50 erhalten.

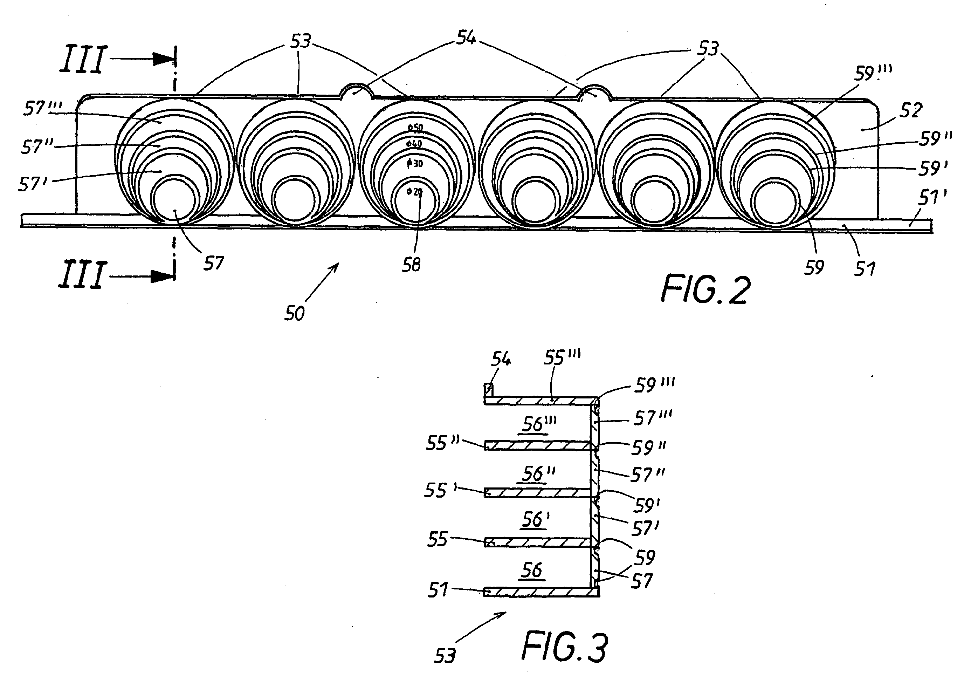

In der Fig. 1 ist der Adapter 50 gezeigt, der eine Öffnung verschließt, die durch Heraustrennen zweier Wandbereiche 35, 35' entsteht. Dieser Adapter 50 ist im Detail in den Fig. 2 und 3 gezeigt. Er besitzt einen Auflageflansch 51, der auf dem die Seitenwände 32 der Bodendose überragenden Bodenrand 34 aufliegt. Die Rückwand 52 des Adapters 50 ist unmittelbar vor der Öffnung in der Seitenwand 32 der Bodendose 30 positioniert und mittels Fixiermitteln 54 an der Seitenwand 32 befestigt, hier nicht dargestellt. Die Fixiermittel 54 sind in diesem Fall zwei die Rückwand 52 des Adapters überragende Befestigungslaschen, die in einen entsprechenden Überstand an der Seitenwand 32 oder in eine Riefe des Rahmens 20 eingreifen könen. Es ist auch möglich, Befestigungsmittel vorzusehen, die an der Seitenwand 32 in Haken oder in entsprechende Ausstanzungen am Boden 31 eingreifen. Letzteres insbesondere, wenn ein Adapter 50 ohne Auflageflansch 51 verwendet wird.

In dem in Fig. 1 gezeigten Fall wird die Positionierung des Adapters 50 zusätzlich durch die Verlängerung 51' des Auflageflansch 51 unterstützt. Diese Verlängerung 51' kommt an den Winkelstücken 21 des Rahmens 20 zur Anlage.

Der in diesem Ausführungsbeispiel gezeigte Adapter 50 besitzt sechs Rohreinlässe 53, wobei in jedem Rohreinlass 53 Rohre unterschiedlichen Durchmessers einsetzbar sind. Wie insbesondere aus Fig. 2 zu ersehen, können standardisierte Rohre mit den Außendurchmessern 20 mm, 30 mm, 40 mm und 50 mm jeweils in einen dieser Rohreinlässe 53 eingesetzt werden. Die entsprechenden Beschriftungen 58 für die standardisierten Durchmesser sind bei einem Rohreinlass 53 auf der Außenwand dargestellt. Selbstverständlich kann die Beschriftung 58 auch bei allen Rohreinlässen 53 vorgesehen sein. Dies erleichtert die Installation. So kann vor Ort entschieden werden, welche Außenwandabschnitte 57, 57', 57", 57''' der Außenwand des Rohreinlasses 53 für das anzuschließende Rohr herauszutrennen sind. Soll beispielsweise ein standardisiertes Rohr mit dem Durchmesser 20 mm angeschlossen werden, so ist aufgrund der Beschriftung 58 klar, dass ausschließlich der Außenwandbereich 57 herausgetrennt werden muss. Soll dagegen ein Rohr mit dem Durchmesser 30 mm angeschlossen werden, so ist zusätzlich zum Außenwandbereich 57 auch der Außenwandbereich 57' herauszutrennen und des Weiteren, wie der Fig. 3 zu entnehmen, neben den Außenwandbereichen 57 und 57' die Rohrführung 55.

In jedem Rohreinlass 53 sind zur Erleichterung der Einführung der unterschiedlichen Rohrenden Rohrführungen 55, 55', 55", 55"' vorgesehen. Wird beispielsweise ein Rohr mit dem kleinsten Durchmesser 20 mm eingeführt, so wird der Wandbereich 57 herausgetrennt. Das Heraustrennen wird durch eine Wandschwächung 59 erleichtert, die sich am Rand des kreisförmigen Außenwandabschnittes 57 befindet. Neben einer Wandschwächung 59 wären auch Perforationen möglich, wenn diese sehr schmal ausgeführt sind und das Eindringen von Estrich nicht ermöglichen, welches nach der Installation der Kanäle und Rohre an die Bodendose angearbeitet wird. Ist der Wandbereich 57 herausgetrennt, lässt sich ein Rohr mit dem Durchmesser 20 mm in den kreisförmigen Zugang des Rohreinlasses 53 einführen. Das Rohrende stützt sich dabei unten auf dem Auflageflansch 51 und ansonsten an der Rohrführung 55 ab. Diese Rohrführung 55 umgibt dann das Rohrende umfassend, d.h. der von vorn sichtbare kreisförmige Zugang, der durch das Heraustrennen des Wandabschnitts 57 frei wird, geht in eine zylinderförmige Führung über, begrenzt durch den Auflageflansch 51 und die Rohrführung 55. Innerhalb dieser zylindrischen Führung ist ein Freiraum vorgesehen, der durch den Hohlraum 56 gebildet wird und ausreichend Platz für die durchzuführenden Anschlussleitungen.

Die einzelnen Rohrführungen 55, 55', 55", 55''' sind ineinander geschachtelt angeordnet, in diesem Fall konzentrisch zueinander, d.h. jede Rohrführung 55, 55', 55", 55"' ergibt zusammen mit dem Auflageflansch 51 eine zylinderförmige Führung, so dass sämtliche Rohre der Durchmesser 20 mm, 30 mm, 40 mm, 50 mm am Boden verlegt werden können. Sollen neben dem vorbeschriebenen Rohr mit dem Durchmesser 20 mm benachbart dazu in einem weiteren Rohreinlass 53 ein Rohr mit dem Durchmesser 30 mm eingeführt werden, so wird ein kreisförmiger Zugang mit einem Durchmesser 30 mm benötigt. Am Rand dieses kreisförmigen Zugangs befindet sich die Wandschwächung 59'. Dazu sind die Außenwandabschnitte 57, 57', die die Hohlräume 56, 56' zwischen dem Auflageflansch 51 und der Rohrführung 55' nach außen begrenzen, herauszutrennen. Mit diesen Außenwandabschnitten 57, 57' wird auch die Rohrführung 55, die mit dem Außenwandabschnitt 57' verbunden ist, entfernt. Es entsteht ein zylinderförmiger Einlass mit dem Durchmesser 30 mm. Das Rohrende des Rohres mit dem Durchmesser 30 mm kann sich am Auflageflansch 51 und an der Rohrführung 55' abstützen.

In gleicher Weise kann ein Zugang für ein Rohr mit dem Durchmesser 40 mm bzw. 50 mm geschaffen werden, in dem für diese kreisförmigen Zugänge, die durch die Wandschwächung 59" bzw. 59''' begrenzt werden, die entsprechenden Außenwandabschnitte 57, 57', 57", die die Hohlräume 56, 56', 56" zwischen dem Auflageflansch 51 und der Rohrführung 55" nach außen begrenzen zusammen mit den Rohrführungen 55, 55'entfernt oder bei Auswahl des Rohres mit dem Durchmesser 50 mm zusätzlich der Außenwandabschnitt 57"', der mit der Rohrführung 55" verbunden ist und den Hohlraum 56''' nach außen begrenzt. Es entstehen entsprechende zylinderförmige Zugänge für die Rohrenden mit dem Durchmesser 40 mm bzw. 50 mm, die vom Auflageflansch 51 und der Rohrführung 55" bzw. der Rohrführung 55''' begrenzt werden.

Es ist möglich, die Rohrführungen 55, 55', 55", 55"' der Rohreinlässe 53 konzentrisch anzuordnen. Für Unterfluranwendungen ist jedoch die in Fig. 2 gezeigte exzentrische Anordnung dieser Rohrführungen 55, 55', 55", 55''' und zwar so, dass sich sämtliche einzuführende Rohre am Boden abstützen können, von Vorteil.

Mit Hilfe dieses neuen Adapters 50, der im Bereich einer Seitenwand 32 vor der Öffnung, die durch das Heraustrennen der Wandabschnitte 35 und/oder 35' entsteht, angeordnet wird und mit Fixiermitteln 54 in dieser Position gehalten wird. Eine Festlegung des Adapters 50 ist auch durch Einschieben oder über andere formschlüssige oder kraftschlüssige Verbindungen möglich. Der Adapter 50 besteht vorzugsweise aus Kunststoff und wird im Spritzguss in einem Schritt hergestellt. Bei dieser Herstellung werden die Wandschwächungen 59, 59', 59", 59''' entsprechend mit eingeformt.

Dieser neue Adapter 50 ermöglicht in einfacher Weise den Anschluss von standardisierten Leerrohren unterschiedlichen Durchmessers an ein und die gleiche Öffnung der Seitenwand 32 in der Bodendose, ohne dass unterschiedliche Adapter für unterschiedliche Durchmesser verwendet werden müssen. Für alle Rohre wird ein und der gleiche Adapter eingesetzt. Erst bei der Installation vor Ort wird entschieden, welche Außenwandabschnitte und eventuelle Rohrführungen für das einzusetzende Rohr herausgetrennt werden müssen. Dies ergibt eine besonders universell einsetzbare Bodendose und damit ein besonders universelles Installationssystem, da an diese Bodendose sowohl rechteckförmige Kanäle als auch Leerrohre an unterschiedlichen Seiten oder benachbart an einer Seite anschließbar sind. Die Vorteile dieses Installationssystems ergeben sich insbesondere bei Unterfluranwendungen, aber auch bei sonstigen Abzweigdosen, an die Leitungen die in Kanälen oder Leerrohren aufgenommen und verlegt werden, angeschlossen werden sollen.

### Bezugszeichenliste:

- 10: Installationssystem
- 20: Rahmen
- 21: Winkelstück
- 22: Einfassung
- 30: Bodendose
- 31: Boden
- 32: Seitenwand
- 33: Wandschwächung
- 34: Bodenflansch
- 35, 35': heraustrennbarer Wandbereich
- 40: Abdeckung
- 50: Adapter
- 51: Auflageflansch
- 51': Verlängerung
- 52: Rückwand
- 53: Rohreinlass
- 54: Fixiermittel
- 55,55',55",55''': Rohrführung
- 56,56',56",56''': Hohlraum
- 57,57',57'',57''': Außenwandbereich
- 58: Beschriftung
- 59,59',59'',59''': Wandschwächung

## Patentansprüche

1. Installationssystem, insbesondere für Unterfluranwendungen, zum Einführen eines oder mehrerer Rohre in einen Anschlussbereich, der nach außen durch mindestens eine Wand (32) begrenzt wird,
wobei durch Heraustrennen von einem oder mehreren Wandbereichen (35, 35') Öffnungen in der Wand (32) für den Einlass der Rohrenden vorhanden sind,
wobei ein Adapter (50) mit einem oder mehreren Rohreinlässen (53) vorgesehen wird, wobei der Adapter (50) vor einer Öffnung einer Wand (32) fixierbar ist,
wobei jeder Rohreinlass (53) des Adapters (50) eine Außenwand aus mehreren heraustrennbaren Außenwandabschnitten (57, 57', 57", 57"') besitzt,
wobei ein Rand mindestens eines Außenwandabschnittes (57) einen kreisförmigen Verlauf hat und durch Herauslösen dieses Außenwandabschnitts (57) allein oder zusammen mit einem oder mehreren benachbarten Außenwandabschnitten (57', 57", 57") jeweils ein kreisförmiger Zugang für runde Rohre unterschiedlichen Durchmessers im Rohreinlass (53) freigebbar ist,
**dadurch gekennzeichnet,**
**dass** jeder Rohreinlass (53) zusätzlich mehrere Rohrführungen (55, 55', 55", 55"') für einzusetzende Rohre unterschiedlichen Durchmessers besitzt, die ineinander geschachtelt so angeordnet sind, dass zwischen zwei benachbarten Führungen ein Hohlraum (56, 56', 56", 56"') verbleibt, wobei jeder Hohlraum (56, 56', 56", 56"') nach außen durch den Außenwandabschnitt (57, 57', 57", 57"') verschlossen ist und wobei entsprechend dem Rohrdurchmesser des einzusetzenden Rohres eine Rohrführung (55, 55', 55", 55"') wählbar ist und der diese Rohrführung (55, 55', 55", 55"') verschließende Außenwandabschnitt (57, 57', 57", 57"') allein oder zusammen mit innerhalb dieser Rohrführung (55, 55', 55", 55"') angeordneten Rohrführungen (55, 55', 55") heraustrennbar ist.

2. Installationssystem nach Anspruch 1, **dadurch gekennzeichnet, dass** die Durchmesser der kreisförmigen Zugänge standardisierten Außendurchmessern von einzusetzenden Rohren entsprechen und die Außenwandabschnitte (57, 57', 57", 57"') jeweils mit einer entsprechenden Beschriftung (58) versehen sind.

3. Installationssystem nach einem der Ansprüche 1 oder 2, **dadurch gekennzeichnet, dass** Sollbruchstellen in Form von Perforationen oder Wandschwächungen (59, 59', 59", 59"') an den Rändern der Außenwandabschnitte (57, 57', 57", 57"') vorgesehen sind.

4. Installationssysteme nach einem der Ansprüche 1 bis 3, **dadurch gekennzeichnet, dass** zylindrische Rohrführungen (55, 55', 55", 55"') vorgesehen sind.

5. Installationssystem nach Anspruch 4, **dadurch gekennzeichnet, dass** die Rohrführungen (55, 55', 55", 55'") exzentrisch angeordnet sind.

6. Installationssystem nach einem der vorhergehenden Ansprüche 1 bis 5, **dadurch gekennzeichnet, dass** der Anschlussbereich in einer runden oder rechteckigen Bodendose (30) untergebracht ist und der Adapter (50) mit seiner gebogenen oder ebenen Rückwand (52) die Öffnung einer Wand (32) der Bodendose (30) verschließt.

7. Installationssystem nach Anspruch 6, **dadurch gekennzeichnet, dass** der Adapter (50) einen Auflageflansch (51) besitzt, mit dem der Adapter (50) auf dem Bodenrand (34) der Bodendose (30) aufliegt.

8. Installationssystem nach einem der Ansprüche 5 bis 7, **dadurch gekennzeichnet, dass** alle Rohrführungen (55, 55', 55", 55"') mit ihrem unteren Rand den Auflageflansch (51) des Adapters (30) oder den Bodenrand (34) der Bodendose (30) berühren.

9. Installationssystem nach einem der vorhergehenden Ansprüche 2 bis 8, **dadurch gekennzeichnet, dass** die Rohrführungen (55, 55', 55", 55"') außerhalb der Öffnung der Wand (32) der Bodendose (30) angeordnet sind.

10. Installationssystem nach einem der vorhergehenden Ansprüche 1 bis 9, **dadurch gekennzeichnet, dass** der Adapter (50) Fixiermittel (54) zur Festlegung des Adapters (50) an der Wand (32) und/oder am Bodenrand (34) der Bodendose (30) und/oder Rahmens (20) besitzt.

11. Installationssystem nach einem der vorhergehenden Ansprüche 1 bis 10, **dadurch gekennzeichnet, dass** der Adapter (50) ein einstückiges spritzgegossenes Kunststoffteil ist.

## Claims

1. Installation system, in particular for underfloor uses, for the introduction of one or more pipes into a connection region which is bounded in the outward direction by at least one wall (32),
wherein openings in the wall (32) for the inlet of the pipe ends are created by removal of one or more wall regions (35, 35'),
wherein an adapter (50) with one or more pipe inlets (53) is provided, it being possible for the adapter (50) to be fixed in front of an opening in a wall (32),
wherein each pipe inlet (53) of the adapter (50) has an outer wall made of a plurality of removable outer-wall portions (57, 57', 57", 57"'),
wherein a periphery of at least one outer-wall portion (57) has a circular progression, and it is possible to free a circular access for round pipes of different diameters in the pipe inlet (53) in each case by said outer-wall portion (57) being detached alone or together with one or more adjacent outer-wall portions (57', 57", 57'"), **characterized in that** each pipe inlet (53) additionally has a plurality of pipe guides (55, 55', 55", 55"') for different-diameter pipes which are to be inserted, said pipe guides being arranged nested one inside the other such that a cavity (56, 56', 56", 56'") remains between two adjacent guides, wherein each cavity (56, 56', 56", 56"') is closed in the outward direction by the outer-wall portion (57, 57', 57", 57"'), and wherein it is possible to select a pipe guide (55, 55', 55", 55"') in accordance with the diameter of the pipe which is to be inserted, and the outer-wall portion (57, 57', 57", 57"') which closes said pipe guide (55, 55', 55", 55'") can be removed alone or together with pipe guides (55, 55', 55") arranged within said pipe guide (55, 55', 55", 55'").

2. Installation system according to Claim 1, **characterized in that** the diameters of the circular accesses correspond to standard external diameters of pipes which are to be inserted, and the outer-wall portions (57, 57', 57", 57'") are each provided with corresponding labelling (58).

3. Installation system according to either of Claims 1 and 2, **characterized in that** predetermined breaking points in the form of perforations or wall weakenings (59, 59', 59", 59"') are provided on the peripheries of the outer-wall portions (57, 57', 57", 57"').

4. Installation system according to one of Claims 1 to 3, **characterized in that** cylindrical pipe guides (55, 55', 55", 55"') are provided.

5. Installation system according to Claim 4, **characterized in that** the pipe guides (55, 55', 55", 55'") are arranged eccentrically.

6. Installation system according to one of the preceding Claims 1 to 5, **characterized in that** the connection region is accommodated in a round or rectangular floor box (30), and the adapter (50) uses its curved or planar rear wall (52) to close the opening in a wall (32) of the floor box (30).

7. Installation system according to Claim 6, **characterized in that** the adapter (50) has a bearing flange (51), by way of which the adapter (50) rests on the bottom periphery (34) of the floor box (30).

8. Installation system according to one of Claims 5 to 7, **characterized in that** all the pipe guides (55, 55', 55", 55"') have their lower periphery in contact with the bearing flange (51) of the adapter (30) or the bottom periphery (34) of the floor box (30).

9. Installation system according to one of the preceding Claims 2 to 8, **characterized in that** the pipe guides (55, 55', 55", 55"') are arranged outside the opening in the wall (32) of the floor box (30).

10. Installation system according to one of the preceding Claims 1 to 9, **characterized in that** the adapter (50) has fixing means (54) for securing the adapter (50) on the wall (32) and/or on the bottom periphery (34) of the floor box (30) and/or frame (20).

11. Installation system according to one of the preceding Claims 1 to 10, **characterized in that** the adapter (50) is a single-piece injection-moulded plastic part.

## Revendications

1. Système d'installation, en particulier pour des applications sous le plancher, pour introduire un ou plusieurs tubes dans une région de raccordement qui est délimitée vers l'extérieur par au moins une paroi (32),
sachant que des ouvertures sont présentes dans la paroi (32) pour l'admission des extrémités des tubes, en détachant une ou plusieurs régions de paroi (35, 35'),
sachant qu'il est prévu un adaptateur (50) doté d'une ou plusieurs entrées de tubes (53), sachant que l'adaptateur (50) peut être fixé en position devant une ouverture d'une paroi (32),
sachant que chaque entrée de tube (53) de l'adaptateur (50) possède une paroi extérieure constituée de plusieurs parties de paroi extérieure détachables (57, 57', 57", 57"'), sachant qu'un bord d'au moins une partie de paroi extérieure (57) possède une allure circulaire et que, par enlèvement de cette partie de paroi extérieure (57), seule ou conjointement avec une ou plusieurs parties de paroi extérieure voisines (57', 57", 57"'), on peut chaque fois libérer dans l'entrée de tube (53) un accès circulaire pour des tubes ronds de différents diamètres,
**caractérisé en ce que** chaque entrée de tube (53) possède en outre plusieurs guides de tubes (55, 55', 55", 55"') pour des tubes à insérer de différents diamètres, guides qui sont disposés en étant emboîtés les uns dans les autres de telle sorte qu'une cavité (56, 56', 56", 56"') reste présente entre deux guides voisins, sachant que chaque cavité (56, 56', 56", 56"') est fermée vers l'extérieur par la partie de paroi extérieure (57, 57', 57", 57"'), et sachant qu'on peut choisir un guide de tube (55, 55', 55", 55"') en fonction du diamètre du tube à insérer et que la partie de paroi extérieure (57, 57', 57", 57"') qui ferme ce guide de tube (55, 55', 55", 55"') peut être détachée seule ou conjointement avec des guides de tubes (55, 55', 55") disposés à l'intérieur de ce guide de tube (55, 55', 55", 55"').

2. Système d'installation selon la revendication 1, **caractérisé en ce que** les diamètres des accès circulaires correspondent à des diamètres extérieurs standardisés de tubes à insérer, et les parties de paroi extérieure (57, 57', 57", 57"') sont respectivement pourvues d'un marquage correspond (58).

3. Système d'installation selon la revendication 1 ou 2, **caractérisé en ce que** des points de rupture privilégiée sous la forme de perforations ou d'affaiblissements de paroi (59, 59', 59", 59"') sont prévus sur les bords des parties de paroi extérieure (57, 57', 57", 57"').

4. Système d'installation selon l'une des revendications 1 à 3, **caractérisé en ce qu'**il est prévu des guides de tubes cylindriques (55, 55', 55", 55"').

5. Système d'installation selon la revendication 4, **caractérisé en ce que** les guides de tubes (55, 55', 55", 55"') sont disposés excentriquement.

6. Système d'installation selon l'une des revendications précédentes 1 à 5, **caractérisé en ce que** la région de raccordement est logée dans un boîtier au sol (30) rond ou rectangulaire, et l'adaptateur (50) ferme par sa paroi arrière (52) courbe ou plane l'ouverture d'une paroi (32) du boîtier au sol (30).

7. Système d'installation selon la revendication 6, **caractérisé en ce que** l'adaptateur (50) possède une bride d'appui (51) par laquelle l'adaptateur (50) repose sur le bord de fond (34) du boîtier au sol (30).

8. Système d'installation selon l'une des revendications 5 à 7, **caractérisé en ce que** tous les guides de tubes (55, 55', 55", 55"') entrent en contact par leur bord inférieur avec la bride d'appui (51) de l'adaptateur (50) ou le bord de fond (34) du boîtier au sol (30).

9. Système d'installation selon l'une des revendications précédentes 2 à 8, **caractérisé en ce que** les guides de tubes (55, 55', 55", 55"') sont disposés à l'extérieur de l'ouverture de la paroi (32) du boîtier au sol (30).

10. Système d'installation selon l'une des revendications précédentes 1 à 9, **caractérisé en ce que** l'adaptateur (50) possède des moyens de fixation en position (54) pour immobiliser l'adaptateur (50) contre la paroi (32) et/ou contre le bord de fond (34) du boîtier au sol (30) et/ou du cadre (20).

11. Système d'installation selon l'une des revendications précédentes 1 à 10, **caractérisé en ce que** l'adaptateur (50) est une pièce en matière plastique moulée par injection d'un seul tenant.
